# EUROPÄISCHE PATENTSCHRIFT

(11) **EP 1 304 439 B1**
(45) Veröffentlichungstag und Bekanntmachung des Hinweises auf die Patenterteilung: **30.03.2005**
(21) Anmeldenummer: 02023082.7
(22) Anmeldetag: 17.10.2002
(51) Int. Cl.: E05D 15/50, B60R 7/04, B60R 11/02

(54) **Deckelöffnungsmechanismus und Fahrzeugmittelkonsole**
Lid opening mechanism and vehicle center console
Mécanisme d'ouverture pour couvercle et console centrale d'un véhicule

(30) Priorität: 19.10.2001 DE 10151704
(43) Veröffentlichungstag der Anmeldung: 23.04.2003
(73) Patentinhaber: Lisa Dräxlmaier GmbH, 84137 Vilsbiburg (DE); Daimler Chrysler AG, 70546 Stuttgart (DE)
(72) Erfinder: Jonischkeit, Christoph, 85567 Grafing (DE); Wimmer, Thomas, 84175 Lichtenhaag (DE); Volkmann, Tilo, 71069 Sindelfingen (DE)
(74) Vertreter: HOFFMANN - EITLE

(56) Entgegenhaltungen:
- EP-A- 0 562 244
- DE-A- 4 309 620
- US-A- 5 067 625
- US-A- 5 620 122
- US-A- 5 931 336
- PATENT ABSTRACTS OF JAPAN vol. 015, no. 447 (M-1179), 14. November 1991 (1991-11-14) & JP 03 189249 A (NISSAN MOTOR CO LTD), 19. August 1991 (1991-08-19)

## Beschreibung

### Gebiet der Erfindung

Die Erfindung betrifft einen Deckelöffnungsmechanismus zum zweiseitigen Öffnen eines Behälters, insbesondere zur Anwendung in einer Fahrzeugmittelkonsole, sowie eine Fahrzeugmittelkonsole, die einen solchen Deckelöffnungsmechanismus verwendet.

Unter einem zweiseitig zu öffnenden Behälter wird ein Behälter verstanden, der zwei Achsen hat, vorzugsweise parallele Achsen an einander gegenüberliegenden Rändern des Behälters, um die ein Deckel wahlweise aufgeschwenkt und somit der Behälter geöffnet werden kann. Die Achsen müssen nicht am Behälter gelagert sein, sondern können auch am Deckel angebracht sein.

Ein Anwendungsgebiet, bei dem in zunehmendem Maß zweiseitig zu öffnende Behälter mit Deckel verwendet werden, sind Fahrzeugmittelkonsolen, wobei durch das zweiseitige Öffnen des Behälters sichergestellt werden soll, dass sowohl der Fahrer als auch der Beifahrer, je nach Öffnungsrichtung, guten Zugang zum Behälter haben. Es sind jedoch auch andere Einsatzgebiete für einen zweiseitigen Deckelöffnungsmechanismus denkbar, beispielsweise in anderen Verkehrsmitteln.

Der zweiseitige Deckelöffnungsmechanismus soll sicherstellen, dass ein Behälter von zwei einander gegenüberliegenden Seiten geöffnet werden kann und Zugang zum Behälter von diesen gegenüberliegenden Seiten je nach Öffnungsrichtung vorhanden ist.

Insbesondere beim Einsatz für Fahrzeugmittelkonsolen müssen die Deckel zusätzlich weitere Funktionen sicherstellen, wie beispielsweise einen sicheren Verschluss, auch im Überschlagsfall, eine robuste Konstruktion sowie ein problemloses Öffnen, damit auch der Fahrer während des Führens des Fahrzeugs, ohne zu stark vom Verkehrsgeschehen abgelenkt zu werden, den Deckelöffnungsmechanismus betätigen kann.

### Stand der Technik

In der Technik sind verschiedenartige zweiseitig zu öffnende Behälter mit Deckel, auch für Fahrzeugmittelkonsolen, bekannt.

Beispielsweise beschreibt die EP 0 491 113 B1 einen zweiseitig zu öffnenden Behälter mit Deckel, der an zwei gegenüberliegenden Seiten des Behälters auf der Behälteroberseite jeweils zwei U-förmige Aufnahmen aufweist, in die Drehschaftteile einsetzbar sind. Die Drehschaftteile sind an zwei einander gegenüberliegenden Seiten eines Federbügels geformt, der im Wesentlichen eine rechteckige Form hat. Die Drehschaftteile sind mittels am Deckel vorgesehener Betätigungselemente entgegen der elastischen Federwirkung aus den dafür vorgesehenen Aufnahmen am Behälter zu verschieben, wodurch der Behälter zu einer Seite geöffnet wird. Die Verschiebung erfolgt dabei im Wesentlichen senkrecht zu Achsrichtung der Drehschaftteile.

Die EP 0 494 496 B1 beschreibt ebenfalls einen zweiseitig zu öffnenden Behälter mit Deckel, dessen Deckelöffnungsmechanismus aus am Behälter angebrachten Achsen, die zueinander parallel an gegenüberliegenden Seiten des Behälters verlaufen, sowie darum umgreifenden zangenartigen Arretier- bzw. Lösemitteln besteht, so dass zu einem Freigeben der Arretierung des Deckels auf einer der Achsenseiten das zangenartige Element geöffnet wird und der Deckel um die andere Achse geschwenkt werden kann.

Die EP 0 495 290 A1 beschreibt ebenfalls einen zweiseitig zu öffnenden Behälter mit Deckel, dessen Deckelöffnungsmechanismus schlitzartige Aufnahmen im Deckel für Arretierachsen hat. Die Arretierachsen sind auf einem schwenkbaren Pfeiler gelagert, so dass die Achsen zum Lösen und Arretieren senkrecht zu ihrer Achsrichtung geschwenkt werden.

Ein weiterer Öffnungsmechanismus für einen zweiseitig zu öffnenden Behälter mit Deckel ist in der US 4,503,584 beschrieben. Zum Öffnen des Behälters werden am Deckel angebrachte Gelenkstifte 16, die durch ein zangenartiges Element am Behälter in der geschlossenen Stellung umfasst sind, durch Öffnen dieses zangenartigen Elements freigegeben, so dass der Deckel aufschwenken kann.

Aus der EP 0 491 126 A1 ist ein Deckelöffnungsmechanismus bekannt, der ebenfalls für einen zweiseitig zu öffnenden Behälter mit Deckel Anwendung findet, bei dem die Drehachsen und die Arretierachsen als getrennte Elemente ausgeführt sind.

Die EP 0 490 468 A1 beschreibt einen zweiseitig zu öffnenden Behälter mit Deckel für eine Fahrzeugkonsole, bei dem U-förmige Eingriffselemente am Deckel über am Behälter gelagerte Achsen greifen. Die Achsen ihrerseits sind ebenfalls in schwenkbaren Elementen gelagert. Im geschlossenen Zustand wird die Verbindung zwischen den Eingriffselementen am Deckel und denjenigen am Behälter beispielsweise durch Magnetstücke bzw. durch senkrecht zur Achsrichtung wirkende Federn erzielt.

Aus der EP-A-0 562 244 ist ein Deckelöffnungsmechanismus gemäß dem Oberbegriff des Patentanspruchs 1 bekannt. Schließlich sind weitere Deckelöffnungsmechanismen aus der US-A-5,931,336, US-A-5,067,625 und JP-A-03-189249 bekannt.

### Darstellung der Erfindung

Es ist eine Aufgabe der vorliegenden Erfindung, einen einfach zu bedienenden zweiseitigen Deckelöffnungsmechanismus vorzusehen, der platzsparend in einem Deckel und einem zugehörigen Behälter unterzubringen ist. Ferner ist es eine Aufgabe der vorliegenden Erfindung, eine Fahrzeugmittelkonsole vorzusehen, die einen solchen Deckelöffnungsmechanismus verwendet.

Diese Aufgabe wird mit einem Deckelöffnungsmechanismus mit den Merkmalen des Anspruchs 1 und einer Fahrzeugmittelkonsole mit den Merkmalen des Anspruchs 19 gelöst.

Der Erfindung liegt der Gedanke zugrunde, die Achsen, die die Drehachsen des Deckels bezüglich des Behälters bilden, gleichzeitig als Arretierachsen zu verwenden, indem sie in ihrer Achsrichtung verschiebbar gestaltet werden. So wird diejenige Achse, um die der Deckel abhängig von der Öffnungsrichtung geschwenkt werden soll, in einer Position gehalten, in der zumindest eines ihrer freien Enden in einem entsprechenden Lagerelement an demjenigen Element aus dem Teilepaar Deckel und Behälter in Eingriff ist, an dem die Achsen nicht in Achsrichtung verschiebbar gelagert sind. D. h. die Achse bildet zusammen mit dem Lagerelement eine Lagerstelle, die zumindest eine Drehbewegung des Deckels bezüglich des Behälters sowie eine translatorische Bewegung der Achse in ihrer Achsrichtung ermöglicht. Gleichzeitig wird die Achse, um die nicht geschwenkt wird, derartig verschoben, dass sie vollständig aus dem mindestens einen Lagerelement zurückgezogen ist. Selbstverständlich ist grundsätzlich auch eine translatorische Bewegung des Lagerelements denkbar, was jedoch einen höheren konstruktiven Aufwand erfordert. Gemäß der Erfindung umfasst der Deckelöffnungsmechanismus ferner einen Blockiermechanismus, um eine in der zweiten Position befindliche Achse dort zu arretieren. Dies stellt sicher, dass beim Schließen des Deckels diese Achse nicht auf das Lagerelement unerwünschterweise aufprallt und dadurch die Achse und/oder das Lagerelement beschädigt wird. Vielmehr wird die Blockierung erst beim Schließen des Deckels nach dem Einrasten in das Lagerelement gelöst, bevorzugterweise durch einen Kontakt des Blockiermechanismus mit dem Lagerelement. Der Blockiermechanismus ist mit drehbaren Anschlägen versehen, mit denen entsprechende an den Achsen angebrachte Anschläge arretierbar sind, so dass eine Längsverschiebung der Achsen verhindert wird, wenn die Anschläge miteinander in Eingriff sind.

Es ist festzuhalten, dass im Falle der Befestigung der Achsen am Deckel die Lagerelemente am Behälter vorgesehen sind und umgekehrt.

Vorteilhafte Ausführungsformen sind durch die übrigen Ansprüche gekennzeichnet.

So ist nach einer bevorzugten Ausführungsform die Schwenkachse jeweils verschiebbar und das Lagerelement fest. Dies ist aus konstruktiven Gründen besonders günstig.

Bevorzugterweise ist die erste und zweite Achse jeweils am Deckel verschiebbar gelagert, was anderseits bedeutet, dass das Lagerelement, das mit den freien Enden bzw. dem mindestens einen freien Ende der Achse in Eingriff kommt, am Behälter vorgesehen ist und dort fest ist. Die Anordnung der Achsen im Bereich des Deckels ermöglicht eine platzsparende und hinsichtlich der Konstruktion einfach unterzubringende Anordnung der Achsen. Gleichzeitig bleibt der Stauraum im Behälter selbst erhalten.

Bevorzugterweise ist für jede Achse ein Betätigungsmechanismus vorgesehen, um die Achse bzw. das Lagerelement oder die Lagerelemente aus der ersten Position in die zweite Position zu verschieben. Solch ein Betätigungsmechanismus, beispielsweise in der Form einer Taste, die eine entsprechende Verschiebung der Achsen beim Niederdrücken der Taste bewirkt, kann beispielsweise jeweils seitlich am Deckel von außen zugänglich vorgesehen sein. Dadurch kann jede Achse getrennt betätigt werden. Beispielsweise können sowohl der Fahrer als auch der Beifahrer, wenn der Deckelöffnungsmechanismus zum Öffnen eines Behälters im Rahmen einer Mittelkonsole verwendet wird, den Deckelöffnungsmechanismus gut betätigen und den Behälter öffnen.

Nach einer bevorzugten Ausführungsform weist der Betätigungsmechanismus einen Bolzen auf, der in Achsrichtung an einem freien Ende der Achse angreift und in der ersten Position, also der geschlossenen Position bzw. der Position, in der die Achse als Drehachse dient, diese so vorspannt, dass das andere freie Ende der Achse mit dem Lagerelement am anderen Element aus dem Teilepaar Deckel und zugehöriger Behälter, gemäß einer bevorzugten Ausführungsform am Behälter in Eingriff ist. Der Bolzen bildet dabei zusammen mit dem Ende der Achse, an dem er angreift und einem weiteren Lagerelement, bevorzugt am Behälter, das zweite Drehgelenk, indem der Bolzen selbst entsprechend gestaltet ist, vorzugsweise hinsichtlich seiner Gestalt und Konfiguration als Fortsetzung der Achse. Dies ermöglicht das Vorsehen eines gut zu betätigenden Drehmechanismus, bei dem die Achse gleichzeitig als Drehachse und als Lagerachse dient.

Bevorzugterweise ist dabei je Achse ein elastisches Element derart vorgesehen, dass die Achse in die zweite Position, also die geöffnete Position, vorgespannt wird. Der Bolzen des Betätigungsmechanismus drückt die Feder entgegen ihrer Vorspannkraft in die erste Position und hält sie dort, wenn die Achse die erste Position einnehmen soll.

Nach einer weiteren besonders bevorzugten Ausführungsform sind die Achsen jeweils mindestens zweiteilig gestaltet, wobei ein Betätigungselement zwischen diesen Achsenteilen so angebracht ist, dass die Achsenteile durch die Verbindung bewegbar in ihrer Achsrichtung sind. Das Betätigungselement ist dabei bevorzugterweise so gestaltet, dass eine Betätigung des Betätigungselements eine Verschiebung beider Achsenteile einer Achse aufeinander zu (also aus der ersten Position in die zweite Position) bzw. voneinander weg (aus der zweiten Position in die erste Position) bewirkt, so dass die Achsenteile aufeinander zu bzw. voneinander weg entlang ihrer Achsrichtungen bewegt werden und dabei ihre freien Enden in Eingriff mit Lagerelementen an dem anderen Element aus dem Teilepaar Behälter und zugehöriger Deckel, also bevorzugterweise am Behälter, kommen bzw. aus diesem Eingriff verschoben werden.

Nach einer besonders bevorzugten Ausführungsform ist das Betätigungselement dabei mit einer im Wesentlichen V-förmigen Nut versehen, wobei in dem einen Schenkel des V's das Ende eines Achsenteils und im anderen Schenkel des V's das Ende des anderen Achsenteils geführt wird, beispielsweise durch entsprechende an den Achsenteilenden angebrachte Vorsprünge. Durch eine Verschiebung des Betätigungselements entlang der Symmetrielinie des V's wird dabei die Bewegung der Achsenteile aufeinander zu oder voneinander weg ausgelöst. Diese Ausführungsform ist hinsichtlich der Konstruktion sehr einfach, ist einfach zu betätigen und nahezu klemmfrei, so dass eine Bedienung des Deckelöffnungsmechanismus problemlos und zuverlässig ist.

Weiter bevorzugterweise ist bei dieser Ausführungsform des Deckelöffnungsmechanismus jeweils ein elastisches Element, beispielsweise eine Feder oder ein Gummielement, für jedes Betätigungselement derart vorgesehen, dass die Betätigungselemente durch das elastische Element so vorgespannt sind, dass die Achsen in der ersten Position, also der Position, in der die freien Enden der Achsenteile in Eingriff mit den Lagerelementen sind, gehalten werden.

In dieser wie in den bisher beschriebenen Ausführungsformen sind die Lagerelemente dabei so gestaltet, dass die freien Achsenden in ihnen drehbar sind und damit der Deckel um sie schwenken kann, wobei gleichzeitig eine Bewegung des Deckels in translatorischer Weise verhindert wird und lediglich die Relativbewegung der Achsen zu den Lagerelementen in Achsrichtung neben der rotatorischen Bewegung erlaubt wird.

Nach einer weiter bevorzugten Ausführungsform ist der Anschlag des Blockiermechanismus in die arretierende Position durch ein elastisches Element, beispielsweise eine Schraubenfeder oder ein Gummielement, vorgespannt. Der Anschlag selbst ist dabei drehbar mittels einer Hilfsachse gelagert, wobei eine Drehung der Hilfsachse, beispielsweise ausgelöst durch das Auftreffen eines entsprechenden Gegenelements am Lagerelement auf ein ebenfalls auf der Hilfsachse vorgesehenes Anschlagselement, das Lösen des Eingriffs der Anschläge bewirkt und somit die Arretierung frei gegeben wird. Dies ist beispielsweise bevorzugterweise dann der Fall, wenn der Deckel in der geschlossenen Position ist, so dass ein Bereich des Lagerelements auf das entsprechende Auslöseelement an der den Anschlag lagernden Hilfsachse stößt, so dass diese Achse zusammen mit dem Anschlag soweit gedreht wird, dass der Anschlag in der freigegebenen Position, also der Position ohne Arretierung, gehalten wird.

Vorteilhafterweise ist ferner ein Sicherungsmechanismus vorgesehen, der verhindert, dass beide Achsen gleichzeitig in der zweiten Position, also der Öffnungsposition, in der ihre Enden nicht mit den Lagerelementen in Eingriff sind, positioniert werden.

Bevorzugterweise wird der Sicherungsmechanismus durch Schieber gebildet, die in Wechselwirkung mit den Anschlägen des Blockiermechanismus sind, so dass sie ein Drehen der Anschläge einer Achse aus der Arretierposition weg verhindern, wenn die andere Achse in der zweiten Position ist. Dies kann beispielsweise durch senkrecht zur Achsrichtung und durch Federn entsprechend vorgespannte Schieber geschehen, die verhindern, dass der Anschlag in die Freigabeposition gedreht wird.

Vorzugsweise umfasst der Deckelöffnungsmechanismus ferner eine Einrichtung zum automatischen Öffnen des Deckels, also zum Hochklappen bzw. gegebenenfalls zusätzlich oder alternativ zum Schließen des Deckels, wenn eine der Achsen in der zweiten Position ist. Dies erleichtert dem Bediener die Handhabung, insbesondere dem Fahrer, wenn er den Deckelöffnungsmechanismus während der Fahrt betätigt, da er sich selbst nicht um das Aufklappen des Deckels bezüglich des Behälters kümmern muss.

Diese Einrichtung ist vorteilhafterweise als Motor z. B. zum Betreiben eines Magnetmechanismus bzw. mittels durch Federn belasteter Zapfen gestaltet. Beide Mechanismen stellen sicher, dass der Deckel zuverlässig hochklappt, wobei bei dem federbelasteten Mechanismus eine mechanische Übertragung vorgesehen wird und bei Zuklappen der Benutzer durch Niederdrücken des Deckels die Vorspannkraft der Feder überwinden muss, während beim motorisch betriebenen Deckelöffnungsmechanismus ggf. auch ein Zuklappen des Deckels automatisch, also durch Betätigung des Motors, geschieht, z. B. durch Energetisieren entsprechender Magnete.

Nach einer vorteilhaften Ausführungsform umfasst die automatische Deckelöffnungseinrichtung sich auf einer Kreisbahn am Behälter bewegende Zapfen, die mit entsprechenden Führungen, zumeist Linearführungen, im Deckel im Eingriff sind. Dabei kann die Drehachse der Zapfen gleichzeitig eine der Schwenkachsen sein. Dies ist jedoch nicht zwingend erforderlich. Statt der Zapfen können selbstverständlich auch andere Elemente, beispielsweise Hebel, verwendet werden. Die Anordnung eines derartigen automatischen Deckelöffnungsmechanismus bietet ferner den Vorteil, dass etwaige Kräfte, zumindest im begrenzten Maß, die bei einem Überreißen, also einem zu weiten Aufklappen des Deckels auftreten könnten, abgefangen werden können, da eine zusätzliche Stabilisierung vorhanden ist.

Vorzugsweise ist für jede Schwenkachse ein Zapfen bzw. ein entsprechend gestaltetes Element und eine entsprechende Führung am Deckel, bevorzugterweise parallel zu der Richtung der Schwenkachsen, vorgesehen, wobei die Bewegung der Zapfen bzw. entsprechenden Elemente durch einen Kopplungsmechanismus, beispielsweise eine Verbindung über Zahnräder, Zahnriemen, Gestänge oder Kombinationen davon, synchronisiert sind und somit die Bewegung eines der Zapfen auch an den anderen Zapfen übertragen wird. Dies bietet den Vorteil, dass der freie Zapfen die gleiche Bewegung wie der Zapfen mitmacht, der aktuell für das Öffnen des Deckels benötigt wird. Dabei kann beim Schließen des Deckels auch der zweite Zapfen sicher wieder in die entsprechende Führung eingehakt werden, ohne das beispielsweise die Schwenkachse auf ein Lagerelement oder ähnliches aufschlägt, was zu Beschädigungen führen könnte.

Nach einer bevorzugten Ausführungsform wird der Deckelöffnungsmechanismus in Rahmen einer Mittelkonsole für ein Fahrzeug, beispielsweise ein Auto, eingesetzt, wobei die Mittelkonsole einen Behälter und einen Deckel aufweist und der Deckelöffnungsmechanismus den Deckel bezüglich des Behälters schwenkt und somit Zugang zum Behälter von zwei Seiten ermöglicht.

Vorteilhafterweise ist der Behälter ein Telefonfach. Solche Telefonfächer werden im Rahmen der Mittelkonsole häufig vorgesehen und eine Zugänglichkeit von sowohl der Fahrer- als auch der Beifahrerseite ist insbesondere zur Betätigung des Telefons günstig.

Vorzugsweise ist in Einbaulage des Behälters und der Mittelkonsole unter dem Telefonfach z. B. ein weiteres Ablagefach angeordnet, wobei dieses Fach dadurch zugänglich ist, dass der Deckel zusammen mit dem Telefonfach um eine dritte Achse, die normalerweise senkrecht zu den Schwenkachsen ist, schwenkbar ist.

Nach einer bevorzugten Ausführungsform ist ferner eine Kabelführung in das Telefonfach z. B. zur Stromversorgung bzw. Antennenversorgung des Telefons vorgesehen, die senkrecht zur Schwenkebene des Deckels und des Telefonfachs verschiebbar ist und ferner durch eine am Behälter angebrachte, starre, aber schwenkbare Führung bewegt wird. Somit wird beim Öffnen des Behälterdeckels zusammen mit dem Telefonfach die Kabelführung in Richtung auf die Schwenkachse gezogen und im geschlossenen Fall davon weg bewegt. Somit kann das an der Kabelführung festangebrachte Kabel bzw. die Kabel ohne Verheddern der Kabel geführt werden, wobei eine ausreichende Kabellänge stets gewährleistet bleibt.

Diese Kabelführung ist bevorzugterweise in einem Zwischenfach unter dem Telefonfach vorgesehen. Dies bietet den Vorteil, dass sie für den Benutzer nicht sichtbar ist.

Selbstverständlich kann der Behälter dabei z. B. auch als Kühlfach, z. B. zum Transport von Medikamenten, verwendet werden. In diesem Fall stellen die Kabel beispielsweise Zuleitungen zu einem Kühlaggregat dar.

Nach einer weiteren bevorzugten Ausführungsform umfasst der zweiseitig schwenkbare Deckel mit dem dadurch zu öffnenden Behälter ferner einen Beleuchtungsmechanismus, der abhängig von der Öffnungsrichtung des Deckels selektiv Leuchtkörper im Deckel und/oder Behälter aktiviert. Dies bietet den Vorteil, unabhängig von der Öffnungsrichtung des zweiseitig klappbaren Deckels eine blendfreie Beleuchtung des Behälterinnenraums sicherzustellen.

Dabei sind beispielsweise in einer ersten bevorzugten Ausführungsform mindestens zwei Leuchten im Deckel vorgesehen, wobei jeweils diejenige Leuchte aktiviert wird, die entfernt von der Schwenkachse liegt, und dabei so gerichtet ist, dass sie in den Behälter strahlt. Die Kontaktierung erfolgt beispielsweise über Schalter, die im Bereich der Schwenkachse des Deckels vorgesehen sind und damit je nach Aufschwenkrichtung des Deckels selektiv aktiviert werden. Alternativ ist es auch möglich, Leuchtkörper im Behälterbereich vorzusehen, die derart angeordnet sind, dass sie gegen den offenen Deckel strahlen, so dass die Blendfreiheit der Beleuchtung sichergestellt bleibt. Dabei sind wiederum mindestens zwei Leuchtkörper, einer je Seitenwand des Deckels, vorgesehen, die durch entsprechende Schalter aktiviert werden, die durch den geöffneten Deckel bestätigt werden. Alternativ kann die Stromversorgung auch durch Kontaktpunkte gesteuert werden, die jedoch in der Regel weniger zuverlässig sind.

### Kurze Beschreibung der Zeichnungen

Nachfolgend wird die Erfindung rein beispielhaft anhand der beigefügten Figuren beschrieben, in denen:
- Figur 1: eine perspektivische Ansicht des Deckelöffnungsmechanismus der vorliegenden Erfindung in einer ersten Ausführungsform ist;
- Figur 2: eine perspektivische Ansicht des Deckelöffnungsmechanismus aus Figur 1 in einer Unterschicht ist;
- Figur 3: eine schematische Ansicht des Deckelöffnungsmechanismus der ersten Ausführungsform ist, wobei die Position gezeigt ist, in der der Deckel geschlossen ist;
- Figur 4: eine schematische Ansicht des Deckelöffnungsmechanismus der ersten Ausführungsform ist, wobei eine Achse in die zweite Position gebracht ist;
- Figur 5: eine schematische Ansicht des Deckelöffnungsmechanismus der ersten Ausführungsform ist, wobei der Deckel geöffnet ist;
- Figur 6: eine Querschnittsansicht durch den Deckelöffnungsmechanismus der vorliegenden Erfindung in einer zweiten Ausführungsform ist;
- Figur 7: eine Querschnittsansicht durch den Deckelöffnungsmechanismus der zweiten Ausführungsform ist, wobei eine Achse in der zweiten Position gezeigt ist;
- Figur 8: eine perspektivische Ansicht eines Behälters mit zweiseitig zu öffnendem Deckel ist, wobei der Deckelöffnungsmechanismus einer dritten Ausführungsform der Erfindung einen Mechanismus zum automatischen Öffnen des Deckels umfasst;
- Figur 9: eine Ansicht auf den Deckelöffnungsmechanismus aus Figur 8 von der Innenseite des Deckels ist, wobei der Deckel im geschlossenen Zustand ist;
- Figur 10: eine Ansicht wie Figur 9 ist, wobei der Deckel halb geöffnet ist;
- Figur 11: eine Ansicht gemäß Figuren 9 und 10 ist, wobei der Deckel noch weiter geöffnet ist;
- Figur 12: eine schematische Ansicht einer Kabelführung für einen Behälter mit Innenschale ist, wobei der Behälterdeckel geschlossen ist;
- Figur 13: eine Ansicht der Kabelführung aus Figur 12 ist, wobei der Behälterdeckel geöffnet ist;
- Figur 14: einen Beleuchtungsmechanismus für einen zweiseitig zu öffnenden Deckel in einer ersten Ausführungsform zeigt, wobei der Behälterdeckel nach links geöffnet ist;
- Figur 15: einen Beleuchtungsmechanismus für einen zweiseitig zu öffnenden Deckel zeigt, wobei der Behälterdeckel nach rechts geöffnet ist;
- Figur 16: eine weitere Ausführungsform eines Beleuchtungsmechanismus für einen zweiseitig zu öffnenden Deckel zeigt, wobei der Deckel nach links geöffnet ist; und
- Figur 17: den Beleuchtungsmechanismus aus Figur 16 zeigt, wobei der Behälterdeckel nach rechts geöffnet ist.

### Wege zur Ausführung der Erfindung

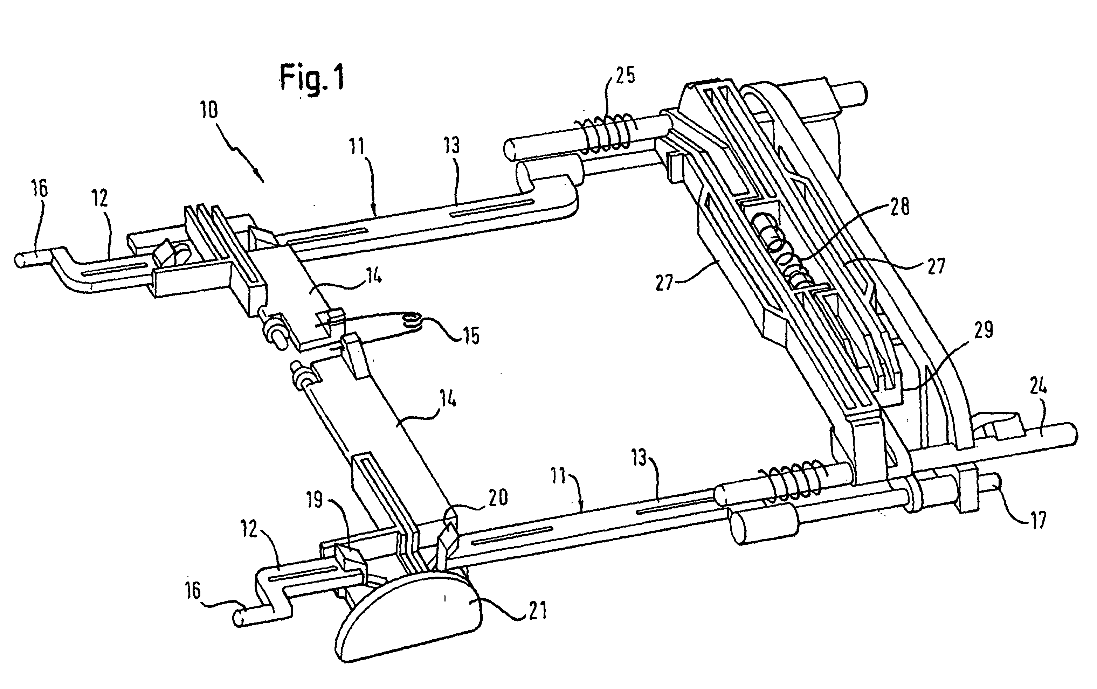

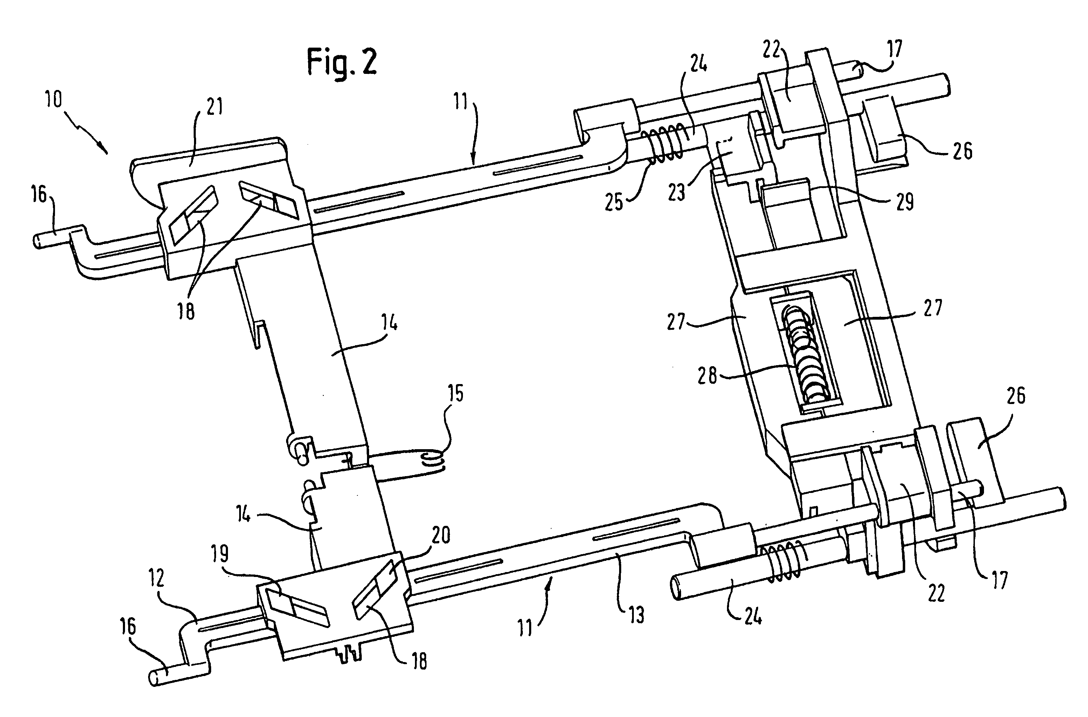

Figuren 1 und 2 zeigen eine perspektivische Ansicht eines Deckelöffnungsmechanismus 10 gemäß einer ersten Ausführungsform der Erfindung. Dabei zeigt Figur 1 im Wesentlichen eine Draufsicht, also die Lage, wie sie vom Deckelöffnungsmechanismus eingenommen wird, wenn dieser am Deckel eines Behälters angebracht ist und in der geschlossenen Position in Einbaulage ist, z. B. in einer Mittelkonsole eines Fahrzeugs. Figur 2 zeigt entsprechend die Ansicht von unten.

Der Deckelöffnungsmechanismus 10 der ersten Ausführungsform umfasst eine erste und eine zweite Schwenkachse 11, wobei jede der Schwenkachsen 11 wiederum aus zwei Teilstücken 12, 13 gebildet ist. Diese Teilstücke 12, 13 sind über ein Betätigungselement 14 miteinander verbunden. Die zu jeder Achse gehörigen Betätigungselemente 14 sind wiederum über eine Feder derart miteinander verbunden, dass die Vorspannkraft der Feder 15 so wirkt, dass die Betätigungselemente 14 diejenige Position einnehmen, in der die Achsen 11 in der geschlossenen Position, also der ersten Position gehalten werden, in der die freien Enden 16, 17 der Achsen 11 bzw. Achsenteile 12, 13 mit (nicht gezeigten) Lagerelementen in Eingriff sind. Ist der Deckelöffnungsmechanismus 10 am Behälterdeckel angeordnet, so sind die (nicht gezeigten) Lagerelemente, die eine Relativdrehung der Achsen 11, jedoch keine translatorische Relativbewegung außer in Achsrichtung erlauben, am Behälter vorgesehen. Die Achsen 11 sind in dieser Ausführungsform bewegbar und die Lagerelemente (nicht gezeigt) fest, so dass die translatorische Relativbewegung zwischen Achse 11 und zugehörigem Lagerelement gewährleistet ist.

Die Betätigungselemente 14 weisen jeweils eine V-förmige Nut bzw. einen V-förmigen Durchbruch 18 auf. Das V ist so gerichtet, dass seine Symmetrieachse senkrecht zu den Schwenkachsen 11 ist und die Spitze des V's auf die Schwenkachsen 11 weist. Die zueinander gerichteten Enden der Achsteile 12, 13 weisen jeweils entsprechende Vorsprünge 19, 20 auf, die in den Nuten 18 in Eingriff und darin verschieblich sind.

Die Betätigungselemente 14 ihrerseits sind derartig gelagert (nicht dargestellt), dass sie im Wesentlichen senkrecht zur Achsrichtung der Achsen 11 verschiebbar sind. Dies bedeutet, dass sie insbesondere aufeinander zu bzw. voneinander weg verschiebbar sind, wobei die Feder 15 die Betätigungselemente 14 in der Position vorspannt, in der sie voneinander entfernt sind.

Am freien Ende der Betätigungselemente 14 ist ferner jeweils eine Taste 21 vorgesehen (in Figur 1 und 2 ist jeweils nur eine gezeigt), die von der Behälteraußenseite bzw. Deckelaußenseite gedrückt werden kann und damit eine Verschiebung des jeweiligen Betätigungselements 14 gegen die Vorspannkraft der Feder 15 bewirkt. Die freie Weglänge der Feder ist dabei so gewählt, dass ein gleichzeitiges Drücken beider Tasten 21 unmöglich ist, also dass bei gedrückter erster Taste 21 die zweite Taste 21 nicht mehr betätigt werden kann.

Der in Figuren 1 und 2 dargestellte Deckelöffnungsmechanismus umfasst ferner einen Blockiermechanismus, der verhindert, dass die Achsen 11 aus der zweiten Position, also der Position, in der der Deckel an dieser Achsseite geöffnet wird, zurück in die erste Position gelangen. Dieser Blockiermechanismus wird in der in Figuren 1 und 2 dargestellten Ausführungsform durch an den Achsen angebrachte Arretieranschläge 22 gebildet, die mit entsprechenden Anschlägen 23 in Wechselwirkung treten, sodass ein Verschieben der Achsen 11 in ihrer Achsrichtung unmöglich wird. Dazu sind die Anschläge 23 auf einer zusätzlichen Hilfsachse 24 so gelagert, dass sie zusammen mit dieser Hilfsachse drehbar sind. Die Position dieser Hilfsachse ist durch eine Feder 25 so vorgespannt, dass im unbelasteten Zustand der Feder 25 der Anschlag 22 mit dem Anschlag 23 in Wechselwirkung tritt. Um ein Verschieben in Längsrichtung der Achse 11 zu vermeiden, ist sowohl der Anschlag 22 als auch der Anschlag 23 T- oder L-förmig gestaltet, so dass jeweils ein Schenkel des T's bzw. L's mit einem entsprechenden Schenkel des T's bzw. L's des anderen Anschlags verhaken kann. In Figur 2 ist die Situation dargestellt, in der die Anschläge 22, 23 nicht verhakt sind. Die Achse 24 ist in diejenige Position durch die Feder 25 vorgespannt, in der der Anschlag 23 mit dem Anschlag 22 verhaken kann, also so, dass er in Figur 2 schräg nach oben weist (nicht dargestellt). Die Drehung der Achse 24 in die in Figur 2 dargestellte Position wird durch einen Druck auf den mit der Hilfsachse 24 drehfest verbundenen Fortsatz 26 ausgelöst. Dieser Fortsatz wird beispielsweise beim Auftreffen auf ein (nicht dargestelltes) Lagerelement gedrückt, so dass die Achse 24 zusammen mit dem Anschlag 22 und dem Fortsatz 26 gedreht wird. Dadurch können die Anschläge 22 und 23 in die in Figur 2 dargestellte Position gebracht werden.

Ferner weist der in Figuren 1 und 2 dargestellte Deckelöffnungsmechanismus noch einen Sicherungsmechanismus auf, der verhindert, dass beide Achsen 11 gleichzeitig in der Position positioniert werden, in der die Achsenenden 16, 17 aus den Lagerstellen (nicht dargestellt) freigegeben sind. Dieser Sicherungsmechanismus umfasst zwei Schieber 27, die an ihrem freien Ende jeweils einen T-förmigen Abschluss aufweisen, wobei vorzugsweise die Außenseite des T's 29 abgeschrägt ausgebildet ist. Diese Erhebungen an den Außenseiten des Schiebers 27 treten in Wechselwirkung mit ebenfalls an der Achse 24 des Blockiermechanismus angebrachten und mit dieser fest verbundenen Fortsätzen, die die Schieber entgegen der Wirkung der Feder 28 in ihrer Lage versetzen können. Dabei wird ein Schieber, nämlich derjenige, der durch das Element betätigt wird, das auf der Seite der Achse 11 ist, die in der zweiten Position ist, so weit in Richtung auf die andere Schwenkachse 11 bewegt, dass der T-förmige Abschluss 29 dieses Schiebers einer Rotation der Achse 24 und dem damit verbundenen Anschlag 23 entgegensteht.

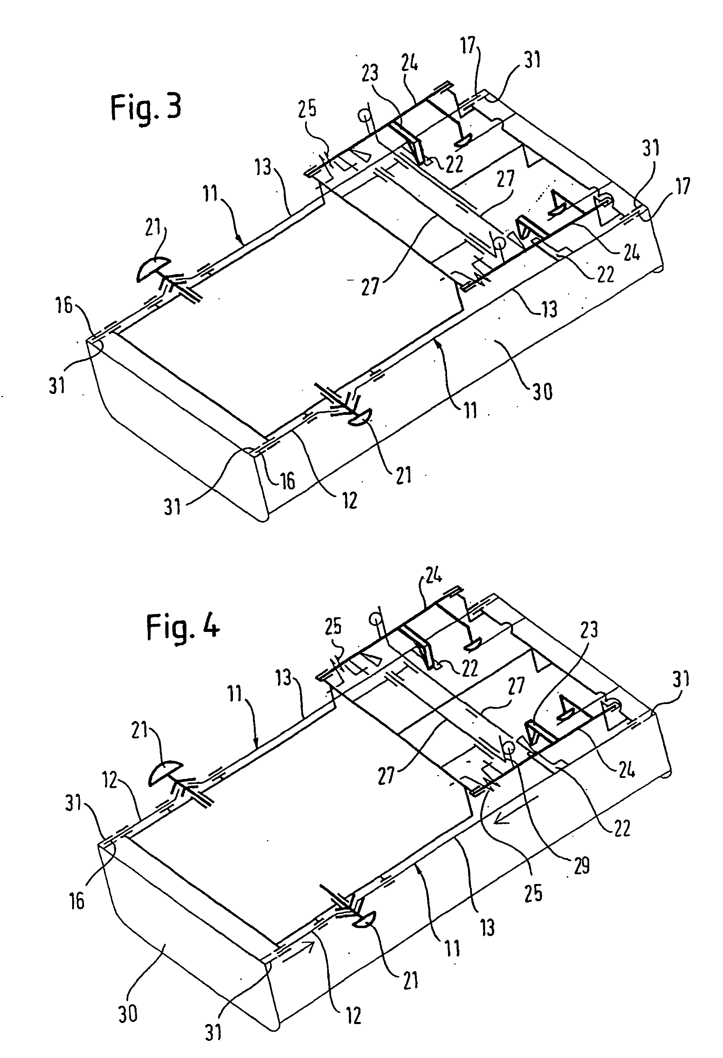

Die Arbeitsweise des Deckelöffnungsmechanismus der ersten Ausführungsform wird nachfolgend anhand der Figuren 3 bis 5 erläutert.

Zunächst ist in Figur 3 die geschlossene Position dargestellt, d. h. diejenige Position, in der ein nicht dargestellter Deckel, an dem der Deckelöffnungsmechanismus 10 angebracht ist, auf einem Behälter 30 ruht. Die Tasten 21 beider Schwenkachsen 11 sind dabei in der Position, in der die Vorsprünge 19, 20 der Achsenteilstücke 12, 13, die an den Enden dieser Teilstücke angebracht sind, die aufeinander gerichtet sind, in der V-förmigen Nut 18 bzw. Aussparung des Betätigungselements 14 außen positioniert sind, also in der Position, in der die Vorsprünge 19, 20 und damit die Achsenteilstücke 12, 13 am weitesten voneinander entfernt sind. Dies bedeutet, dass die freien Achsenden 16, 17 jeweils in Lagerstellen 31 am Behälter 30 so in Eingriff sind, dass sie innerhalb dieser Lagerstellen 31 drehbar sind und in Achsrichtung der Achse 11 jeweils verschiebbar sind, nicht jedoch in anderen Raumrichtungen translatorisch bewegbar sind.

Die Achse 11 bzw. die Achsenteilstücke 12, 13 sind durch Lager, die eine Verschiebung in Achsrichtung zulassen, am Deckel (nicht dargestellt) befestigt. Ferner ist je Achse 11 eine ebenfalls drehbare Achse 24 als Hilfsachse vorgesehen, mit Hilfe derer der Blockiermechanismus sowie der Sicherungsmechanismus betätigt werden kann. In der geschlossenen Deckelposition sind die Schieber 27 dabei so positioniert, dass die die Schieber betätigenden Elemente an der Achse 24 die Bewegung der Schieber 27 nicht beeinträchtigen, so dass diese in ihrer Ruheposition sind. In gleichem Maß sind auch die Anschläge 23, die ebenfalls an der Hilfsachse 24 angebracht sind, in einer derartigen Winkelposition zu den Anschlägen an der Achse 11, dass ein freies Verschieben der Schwenkachse 11 zusammen mit den darauf vorgesehenen Anschlägen 22 auf beiden Seiten des Deckels möglich ist.

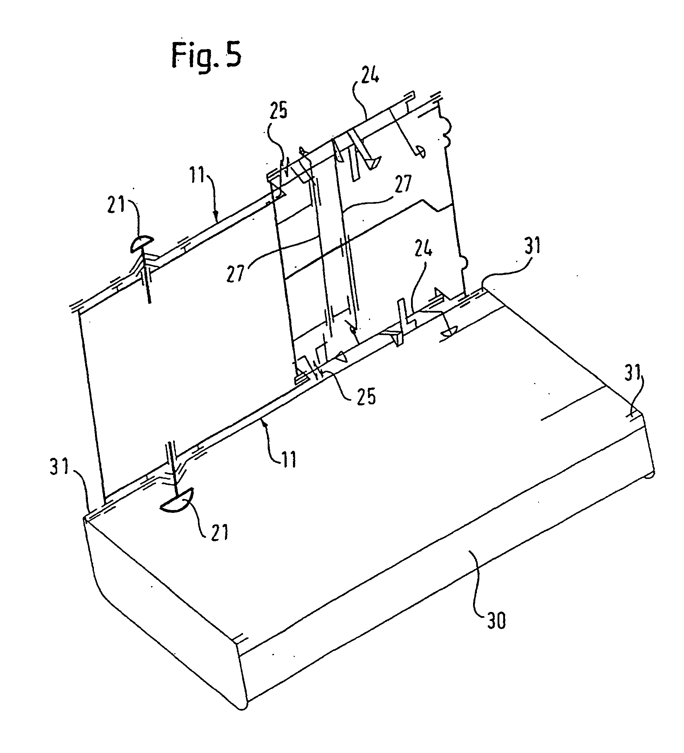

Wird nachfolgend eine der Tasten 21 gedrückt, im in Figur 4 dargestellten Fall die vordere, so bewegen sich die Achsenteilstücke 12 und 13 jeweils aufeinander zu, da die Vorsprünge 19, 20 an ihren Enden in der V-Nut durch die Bewegung des Betätigungselements 14 senkrecht zur Achsrichtung der Achsen 11 aufeinander zu laufen. Dabei werden die Achsenteilstücke 12, 13 ebenfalls aufeinander zu bewegt, wie es durch die Pfeile in Figur 4 angedeutet ist. Insbesondere bedeutet dies, dass die Achsenteilstücke 12, 13 aus dem Eingriff mit den Lagerelementen 31 am Behälter 30 gelangen. Die zweite Achse (in Figur 4 die hintere) bleibt von dieser Bewegung unbeeinträchtigt. Mit der Bewegung des Achsenteilstücks 13 (nach links in Figur 4) wird gleichzeitig der an diesem Teilstück 13 angebrachte Anschlag 22, über den Anschlag 23, der an der Hilfsachse 24 angebracht ist, nach links bewegt. Die Hilfsachse 24 dreht sich durch die Vorspannwirkung der Feder 25, so dass die Anschläge 22 und 23 miteinander in Eingriff kommen und eine Verschiebung des Achsenteilstücks 13 nach rechts ist nicht mehr möglich. Die Drehung der Hilfsachse 24 wird möglich, da das sie durch Druck belastende Element, nämlich das Lagerelement am Behälter 31, außer Eingriff mit dem Fortsatz 26 kommt.

Gleichzeitig wird auch einer der Schieber 27 senkrecht zur Achsrichtung der Schwenkachsen 11 soweit verschoben, dass der Anschlag 22 der nicht geöffneten Achsseite soweit geschwenkt wird, dass er ebenfalls gegen den Anschlag 22 auf dieser Achsseite stößt. Somit wird durch den Schieber 27 verhindert, dass der Anschlag 22, 23 bei geöffnetem Deckel unbeabsichtigt oder zufällig von Hand verschoben wird, wodurch ein ordnungsgemäßes, späteres Schließen des Deckels unmöglich würde. Eine Betätigung der zweiten Taste 21 ist aufgrund der freien Weglänge der Feder 15 in diesem Zustand unmöglich. In diesem Zustand kann der Deckel aufgeschwenkt werden, wie es in Figur 5 dargestellt ist.

Soll der Deckel wieder geschlossen werden, so ist dies problemlos möglich, da alle Elemente durch die entsprechenden Sicherungen in ihrer offenen Position gehalten werden. Erst durch das Auftreffen des Fortsatzes 26 der Achse 24 auf das Lagerelement 31 wird diese Achse gedreht, so dass einerseits die Verrastungen 22, 23 der Anschläge gelöst werden und andererseits die Schieber 27 ebenfalls in ihre ursprüngliche Position zurückkehren können. Dadurch kann der Deckel sicher geschlossen werden, unabhängig davon, ob Erschütterungen oder ähnliches während des Fahrens, beispielsweise, auftreten. Somit dient die Achse 11 jeweils gleichzeitig als Lagerung an den Lagerstellen, die durch die Achsenenden 16, 17 und die Lagerelemente 31 gebildet werden, sowie als Drehachse, um die der Deckel 40 aufgeschwenkt werden kann.

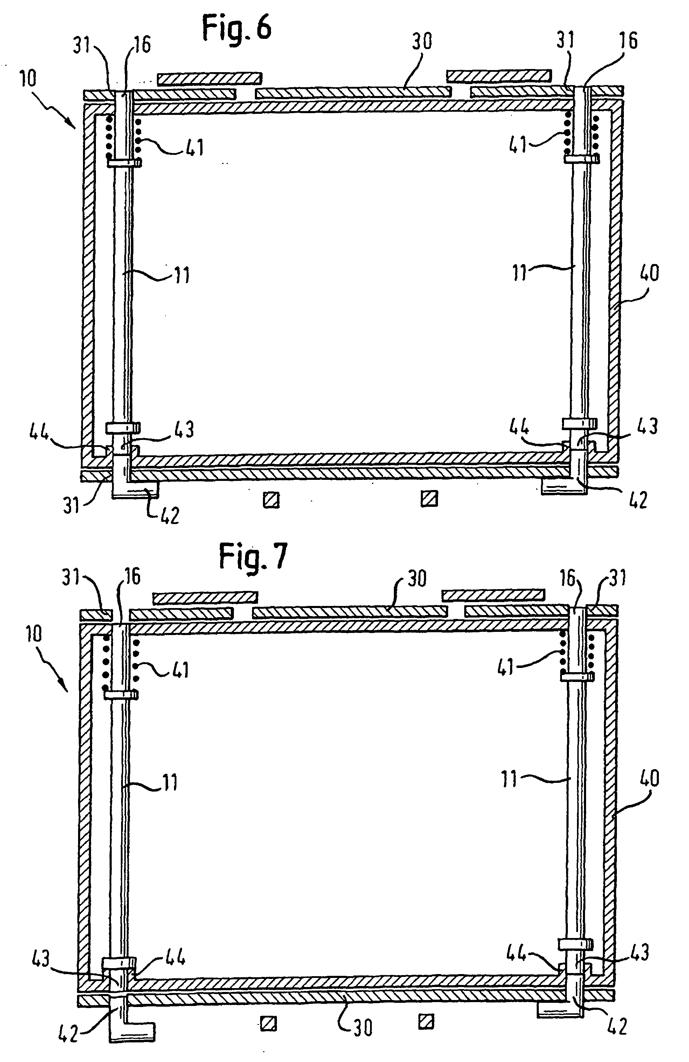

Anhand der Figuren 6 und 7 wird nachfolgend eine zweite Ausführungsform der vorliegenden Erfindung erläutert.

In Figur 6 ist dabei die Situation in einer Querschnittsansicht dargestellt, in der der Deckel 40 über einen Behälter 30 geschlossen ist. Figur 7 zeigt diejenige Situation, in der der Behälter geöffnet werden kann und um eine Achse, die rechte in Figur 7, geschwenkt werden kann.

Figur 6 zeigt einen Behälter 30, auf den ein Deckel 40 aufgesetzt ist, der entlang der Achsen 11 wahlweise geschwenkt werden kann. Der Deckelöffnungsmechanismus umfasst neben den Achsen 11 ein Federelement 41 je Achse, mit dem die Achsen derart vorgespannt werden, dass sie sich in der geöffneten Position befinden, d. h. vollständig innerhalb des Deckels 40. Die Achsen 11 sind jeweils auf einer ihrer freien Endseiten an Lagerstellen 31 im Gehäuse 30 gelagert, so dass sie darin drehbar sind und entlang ihrer Achsrichtung verschiebbar sind. Am gegenüberliegenden Ende ist ein Bolzen 42 vorgesehen, der eine Kraft in Achsrichtung auf die Achsen 11 aufbringt und sich direkt an diese in der geschlossenen Position anschließt. Der Bolzen 42 ist in der in Figur 6 dargestellten geschlossenen Position direkt anschließend an die Achsen 11 und wird zusammen mit einem Endstück der Achsen 11, das mit Referenzziffer 43 in Figuren 6 und 7 bezeichnet ist, durch entsprechende Lagerstellen am Deckel 44 sowie am Behälter 31 geführt.

Nachfolgend wird die Arbeitsweise des Deckelöffnungsmechanismus der zweiten Ausführungsform erläutert.

In der geschlossenen Position, die in Figur 6 gezeigt ist, werden beide Achsen durch jeweilige Bolzen 42 oder bolzenähnliche Elemente gegen die Vorspannkraft der Federn 41 jeweils so gedrückt (nach oben in Figur 6 bzw. 7), dass ein Achsende in Eingriff mit einer Lagerstelle 31 des Behälters 30 ist und das andere Achsende 43 durch einen Bolzen 42 so gedrückt wird und sich dieser direkt daran anschließt, dass das Achsende 43 zusammen mit dem Bolzen 42 ebenfalls entlang der Achsrichtung verschiebbar und drehbar in Lagerstellen 44 bzw. 31 am Deckel 40 bzw. Behälter 30 gelagert ist.

Wird nun eine nicht dargestellte Taste an einer der Achsen betätigt, so wird über einen allgemein bekannten Mechanismus der Bolzen 42 zurückgezogen, so dass er nur noch im Gehäuse 30 gelagert ist. Eine Wechselwirkung zwischen dem Bolzen 42 und dem Deckel 40 findet in dieser Position nicht mehr statt. Durch die Freigabe durch den Bolzen 42 kann sich die Achse 11 durch die Wirkung der Feder 41 soweit in Achsrichtung translatorisch bewegen, dass sie vollständig innerhalb des Deckels 40 ist und nicht mehr in der Lagerstelle 31 am Behälter 30 mit ihrem freien Ende gelagert ist. In Figur 7 entspricht dies einer Verschiebung nach unten. Somit entsteht die in Figur 7 dargestellte Situation, in der die linke Achse 11 vollständig innerhalb des Deckels 40 ist und somit der Deckel um die rechte Achse 11, die eine bezüglich Figur 6 unveränderte Position einnimmt, geschwenkt werden kann, wobei die linke Achse 11 dieser Schwenkbewegung nicht entgegensteht.

Zum Schließen wird der Bolzen 42 wieder über einen an sich bekannten Mechanismus an die Achse 11 gedrückt, wodurch diese zusammen mit dem Bolzen 42 so verschoben wird, dass sie wieder in die Lagerstelle 31 am Gehäuse eingreift bzw. der Bolzen 42 zusammen mit der Achse 11 eine weitere Lagerung vorsieht.

Selbstverständlich ist es möglich, in dieser zweiten Ausführungsform ähnliche Sicherungs- bzw. Blockiermechanismen vorzusehen, wie bei der in Figuren 1 bis 5 gezeigten ersten Ausführungsform, auch wenn diese in Figuren 6 und 7 nicht dargestellt sind.

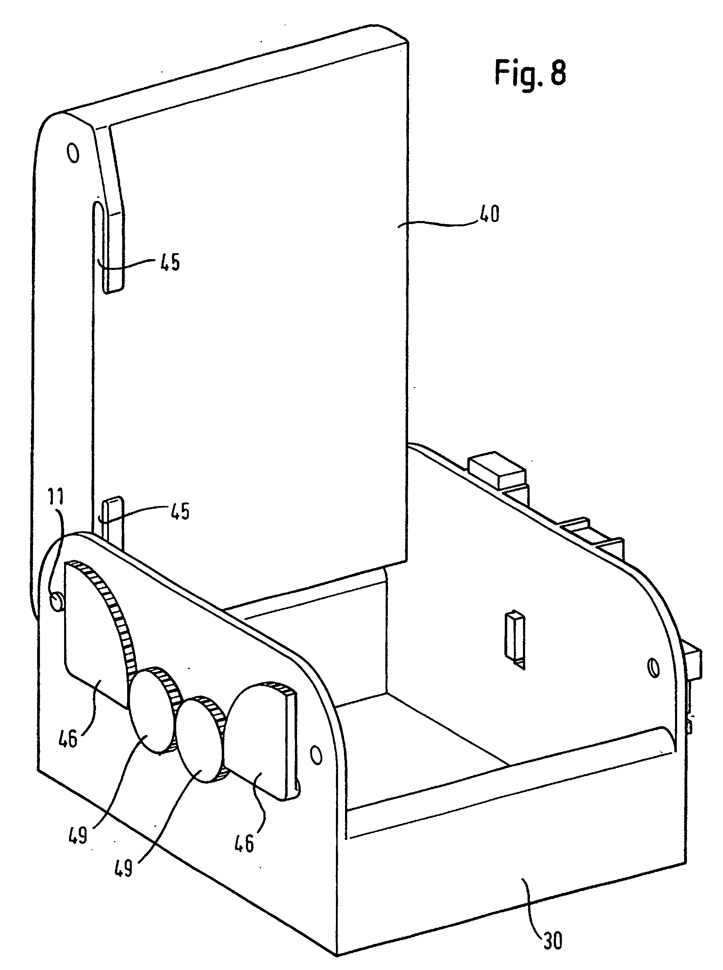

Unter Verweis auf Figuren 8 bis 11 wird nunmehr ein Mechanismus zum selbsttätigen (automatischen) Öffnen des Deckels 40 beschrieben, der besonders vorteilhaft in Verbindung mit dem Deckelöffnungsmechanismus gemäß der Erfindung verwendet werden kann, jedoch auch auf andere zweiseitig zu öffnende Deckel Anwendung finden kann.

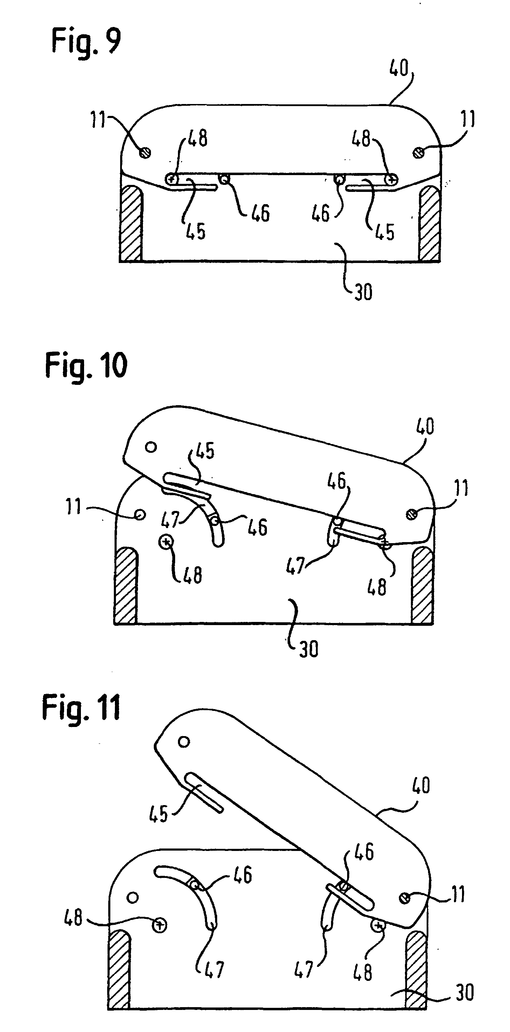

Die in Figuren 8 bis 11 dargestellte Einrichtung zum automatischen Öffnen des Deckels umfasst Führungen 45, die als Aussparungen oder Nuten am Behälterdeckel 40 vorgesehen sind. Diese Führungen 45 verlaufen in der Position, in der der Deckel geschlossen ist, im Wesentlichen horizontal (in Einbaurichtung). Diese geschlossene Situation ist in Figur 9 dargestellt. Wie es ferner insbesondere den Ansichten aus Figur 9 bis 11 zu entnehmen ist, die die Einrichtung zum automatischen Öffnen des Deckels von dem Behälterinnenraum aus zeigen, umfasst die Einrichtung ferner entlang einer Kreisbahn laufende Zapfen, die beispielsweise mittels Federn in die geöffnete Position (oberes Ende der Kreisbahnen in Figuren 9 bis 11) vorgespannt sind bzw. motorisch betrieben dorthin bewegt werden können.

Diese Zapfen 46, die entlang der kreisförmigen Bahnen 47 laufen, haben einen Drehpunkt 48, der bezüglich der Schwenkachse 11 des Deckels 40 bezüglich des Behälters 30 versetzt ist. Dadurch können vorteilhaft solche Kräfte aufgefangen werden, die möglicherweise ein übermäßiges Öffnen des Deckels 40 bezüglich des Behälters 30 bewirken würden. Durch die Bewegung der Zapfen 46 entlang der Kreisbahn und durch Einrasten der Zapfen 46 in die Aufnahmen 45 wird der Deckel durch die Bewegung der Zapfen 46 mitgeführt, so dass er aufschwenkt. Dies geschieht unmittelbar immer dann, wenn eine Seite des Deckels 40 aus der Arretierung z. B. der Achsen 11 mit den Lagerstellen 31 gelöst ist, da dann beispielsweise die Vorspannkraft der Feder (nicht gezeigt), mit der die Zapfen 46 in die geöffnete Deckelposition vorgespannt sind, bewirkt, dass der Zapfen 46 auf einer Kreisbahn bewegt wird.

Wie es aus Figur 8 zu erkennen ist, umfasst die Einrichtung zum automatischen Öffnen des Deckels ferner einen Übertragungsmechanismus, der in der dargestellten Ausführungsform durch Zahnräder 49 gebildet wird. Dadurch wird die Bewegung eines Zapfens 46 (in Figur 8 von der Rückseite her als Kreissegment dargestellt) an den anderen Zapfen 46 übertragen. Dies bedeutet insbesondere, dass der aktuell nicht den Deckel öffnende Zapfen 46 spiegelsymmetrisch zum den Deckel öffnenden Zapfen 46 bewegt wird und zwar sowohl während des Öffnens als auch während des Schließens des Deckels 40. Dadurch kann sichergestellt werden, dass beim Einrasten des Deckels 40 beim Schließvorgang der Zapfen 46 wieder korrekt in die Führung 45 einrastet und somit der Deckel kontrolliert geschlossen wird, ohne das er beispielsweise auf einen weiter nach oben stehenden Zapfen 46 auftrifft und diesen möglicherweise beschädigen würde.

Selbstverständlich sind zur Übertragung der Bewegung eines Zapfens 46 an den anderen Zapfen 46 auch andere Übertragungsmechanismen möglich, beispielsweise durch Gestänge oder eine Kombination aus Zahnrädern und Gestängen, Ketten und ähnliches.

Durch Gestaltung der Bahn 47, entlang derer der Zapfen 46 bewegt wird, als Viertelkreis ist ein Aufschwenken des Deckels 40 bezüglich des Behälters 30 um ca. 90° möglich. Soll jedoch, je nach Anwendung, nur ein geringerer Öffnungswinkel des Behälters realisiert werden, so kann dies einfach durch entsprechende Anpassung der Bahnlänge (Öffnungswinkel) der Bahn des Zapfen 46 geschehen. Auch ein weiterer Öffnungswinkel ist durch entsprechende Anpassung der Länge des Kreisumfangsausschnitts, der die Bahn formt, möglich.

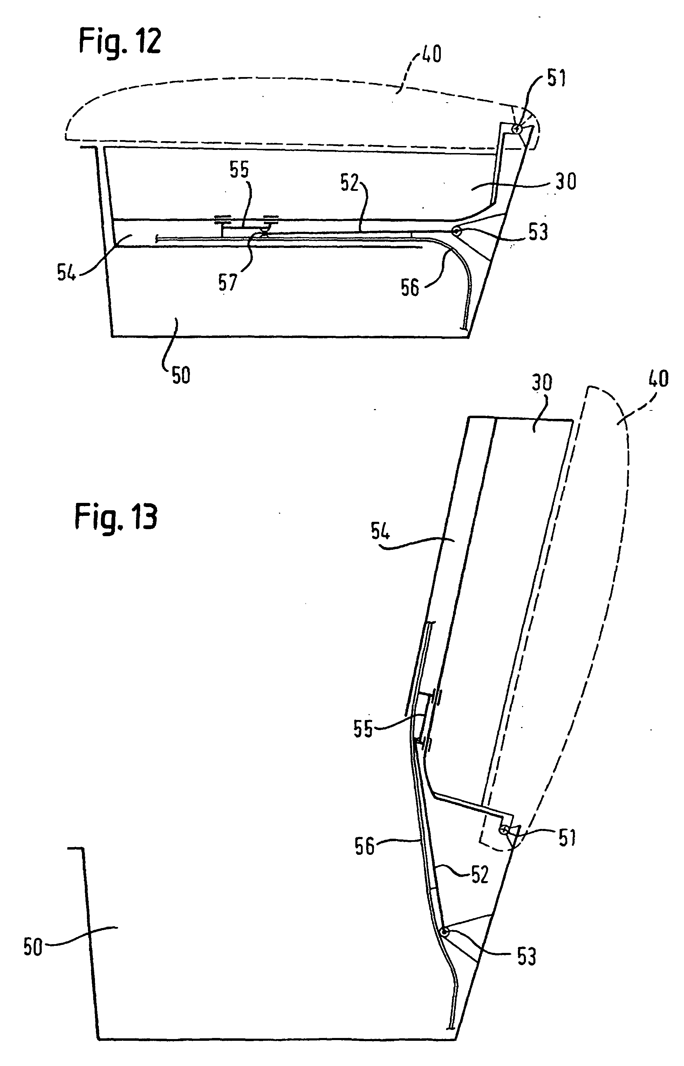

Nach einer besonders bevorzugten Ausführungsform wird der Behälter 30 mit dem zweiseitig zu öffnenden Deckel 40 mit dem erfindungsgemäßen Deckelöffnungsmechanismus 10 als Telefonfachdeckel im Rahmen einer Mittelkonsolenlösung eingesetzt. Dabei ist unterhalb des durch den Behälter 30 gebildeten Telefonfachs wie es beispielsweise in Figur 12 gezeigt ist noch ein weiteres Ablagefach 50 vorgesehen. Bezüglich dieses Ablagefachs ist der Deckel 40 einseitig zu öffnen, nämlich um die mit Referenzziffer 51 in Figuren 12 und 13 bezeichnete Achse zu schwenken.

In Figuren 12 und 13 ist ein in Verbindung mit dem erfindungsgemäßen Deckelöffnungsmechanismus, wenn dieser für ein Telefonfach, das in einer Mittelkonsolenlösung integriert ist, verwendet wird, besonders vorteilhafter Führungsmechanismus für ein Kabel 56 in dieses Telefonfach 30 gezeigt. Der Kabelführungsmechanismus an sich ist jedoch selbstverständlich auch für andere Deckellösungen bzw. Schwenklösungen denkbar, solange ein Telefonfach 30 einerseits zusammen mit dem Deckel 40 geschwenkt werden kann, um ein darunter liegendes Ablagefach 50 zu öffnen, jedoch andererseits auch der Deckel 40 allein geschwenkt werden kann, um Zugang zu dem Telefonfach zu gewähren.

Der in Figuren 12 und 13 dargestellte Kabelführungsmechanismus umfasst im Rahmen des festen Ablagefachbehälters 50 eine Lagerung für eine Stange bzw. ein stangenähnliches Bauteil 52, so dass dieses um einen Drehpunkt 53 am Behälter 30 schwenkbar ist. Das stangenartige Bauteil 52, das nach einer bevorzugten Ausführungsform in einen Zwischenboden 54 geführt wird, der am Telefonfach 30 vorgesehen ist, weist an seinem vorderen Ende, ebenfalls um ein Drehgelenk 57 schwenkbar befestigt, eine Kabelführung 55 auf, an der die beispielsweise für das Telefonfach nötigen Kabel angebracht sind. Selbstverständlich kann jede beliebige Art von Kabeln durch diese Kabelführung 55 geführt werden, beispielsweise auch Zuführungen für Kühlfächer, Heizfächer oder ähnliches.

Unter Verweis auf Figuren 12 und 13 wird nachfolgend die Arbeitsweise des Kabelführungsmechanismus erläutert.

Ist der Deckel und das daran angebrachte Fach 30, z. B. ein Telefonfach, geschlossen, so ist die Kabelführung 55 verhältnismäßig weit innen liegend bezüglich der Öffnung zum Drehgelenk des stangenartigen Elements 52 am Behälter 50, so dass das Kabel 56 straff geführt wird und nicht lose liegt. Dies bedeutet, der Abstand zwischen Kabelführung 55 und Drehgelenk 53 ist groß. Wird nunmehr der Deckel, wie es in Figur 13 gezeigt ist, geöffnet, so gleitet die Kabelführung 55 und mit ihr das daran angebrachte Kabel 56 im Zwischenfach 54 entlang des Bodens des Telefonfachbehälters 30 durch die Zugkraft, die über das stangenartige Element 52 auf sie aufgebracht wird. Dadurch wird das Kabel zurückgezogen und etwaiges überschüssiges Kabel, das zum Sicherstellen einer stets korrekten Verbindung mit etwaigen Anschlüssen im Telefonfach 30 benötigt wird, verbleibt verdeckt im Zwischenfach 54. Im Bereich des Ablagefachbehälters 50 wird das Kabel stets straff geführt.

Selbstverständlich sind anstatt des Gestänges auch andere Elemente einsetzbar, beispielsweise plattenartige Elemente oder ähnliches. Ferner können diese Elemente, sollte dies hinsichtlich der Gestaltung notwendig sein, Krümmungen und ähnliches aufweisen. Die Kabelführung 55 ist in bevorzugter Weise als an dem Behälterboden 30 gleitender Schlitten ausgeführt. Selbstverständlich kann die Führung jedoch auch am Boden des Zwischenfachs 54 vorgesehen sein. Beispielsweise ist auch eine Führung durch Schienen oder durch Nut-Feder-Eingriffe und ähnliches denkbar.

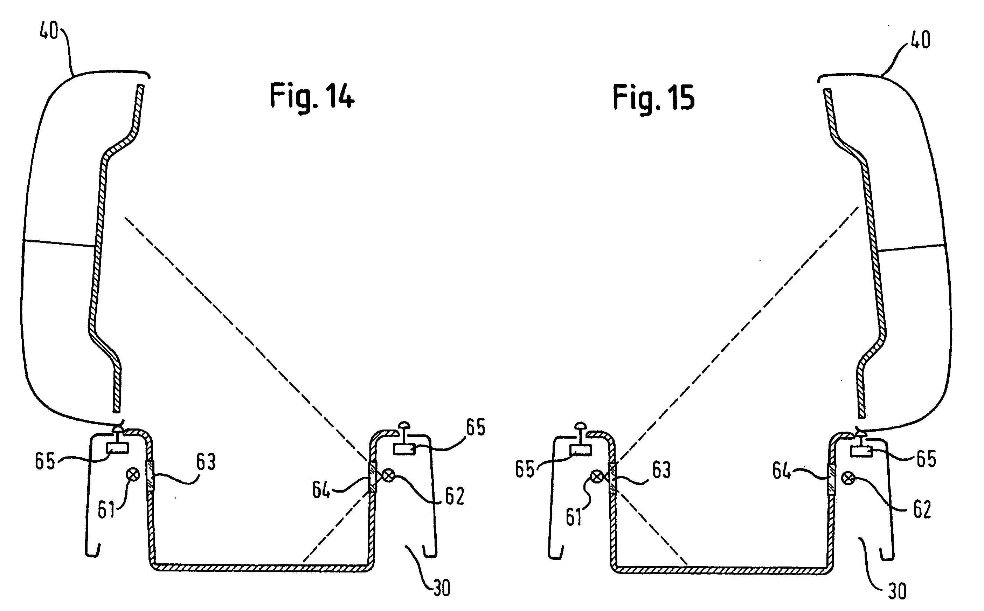

Schließlich wird unter Bezug auf Figuren 14 bis 17 eine erste und eine zweite Ausführungsform eines Beleuchtungsmechanismus für einen zweiseitig zu öffnenden Deckel 40 beschrieben.

Besonders vorteilhaft kann dieser Beleuchtungsmechanismus jeweils mit einem Deckelöffnungsmechanismus gemäß der Erfindung angewendet werden. Selbstverständlich ist er jedoch auch für andere zweiseitig zu öffnende Deckel verwendbar.

Insbesondere umfasst der Beleuchtungsmechanismus mindestens zwei Leuchtelemente 61, 62 (Licht emittierende Elemente), von denen jeweils mindestens eines auf jeder Seitenwand entlang der Schwenkachsenrichtung des Behälters 30 oder in der alternativen Ausführungsform des Deckels 40 angeordnet ist. Bei der in Figuren 14 und 15 gezeigten Ausführungsform sind die Leuchtkörper 61, 62 im Bereich des Behälters 30 angeordnet, dessen Wände im Bereich der Leuchtkörper 61, 62 durchbrochen sind und mit lichtdurchlässigem Material 63, 64 verkleidet sind, so dass die aus den Leuchtkörpern 62, 61 emittierten Leuchtstrahlen durch sie dringen können und den Behälter beleuchten können. Der Abstrahlwinkel der Leuchtkörper 61, 62 wird dabei so justiert, dass der nach oben abweisende Strahl in jedem Fall auf den Behälterdeckel 40 trifft und nicht über ihn hinaus läuft, was möglicherweise zu einer Blendung der Fahrzeuginsassen, möglicherweise insbesondere des Fahrers, führen würde und somit eine Beeinträchtigung der Sicherheit ist.

Ferner umfasst der in Figuren 14 und 15 dargestellte Beleuchtungsmechanismus Schalter 65, die durch das Öffnen des Deckels 40 beispielsweise gedrückt werden und somit EIN bzw. AUS geschaltet werden. Dabei ist auf jeder Behälterwand entlang der Achsrichtung der Schwenkachsen des Deckels jeweils ein Schalter 65 vorgesehen, um gleichzeitig die Öffnungsrichtung des Deckels 40 zu erfassen und durch die offene Stellung des Deckels 40 den Schalter 65 zu betätigen, so dass über einen an sich bekannten Schaltkreis der Leuchtkörper 62 mit Strom versorgt wird.

Anstatt der in Figuren 14 und 15 dargestellten Schalter 65 ist es prinzipiell auch möglich, Kontakte zu verwenden. Dabei ist jedoch die erhöhte Anfälligkeit der Kontakte insbesondere gegenüber Verschmutzung der Kontaktstellen nachteilig gegenüber der Verwendung von herkömmlichen Schaltern. Ebenfalls kann prinzipiell auch eine manuelle Schaltung vorgesehen werden, die nicht an die Deckelöffnung gekoppelt ist. Dies ist jedoch ebenfalls nicht bevorzugt, da möglicherweise ein Abschalten der Beleuchtung durch den Benutzer vergessen wird bzw. Unsicherheit beim Handhaben der Beleuchtung besteht.

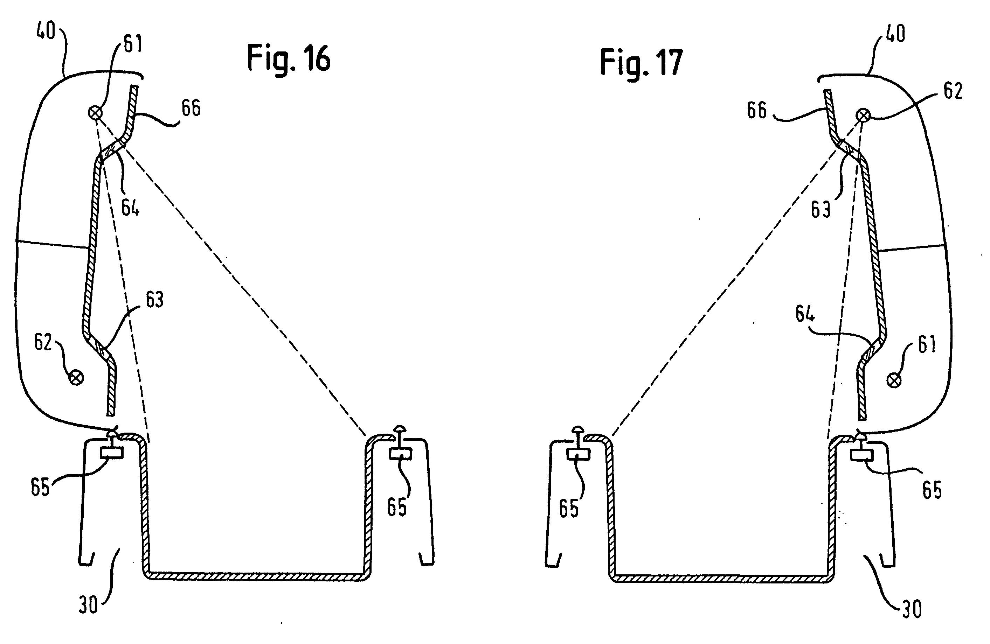

In der in Figuren 16 und 17 dargestellten alternativen Ausführungsform ist die Anordnung der Schalter identisch zur ersten Ausführungsform des Beleuchtungsmechanismus aus Figuren 14 und 15. Allerdings sind die Leuchtkörper 61, 62 nicht am Behälter 30, sondern am Deckel 40 vorgesehen. Hierbei wird die Strahlung so gewählt, dass sie in den Behälter trifft und ebenfalls blendfrei erfolgt. Damit dies gewährleistet wird, sind entsprechende lichtdurchlässige Stellen, die beispielsweise mit transparentem Material verkleidet sind, in dem Bereich des Deckelbodens 66 vorgesehen, der in Richtung auf die Behälterinnenseite gerichtet ist.

Der wesentliche Aspekt der Erfindung liegt darin, einen Deckelöffnungsmechanismus für einen zweiseitig zu öffnenden Deckel vorzusehen, der aufgrund der gleichzeitigen Verwendung der Schwenkachsen als Lagerachsen platzsparend einzubauen und zuverlässig zu bedienen ist.

## Patentansprüche

1. Deckelöffnungsmechanismus (10), umfassend eine erste Schwenkachse (11) und eine zweite Schwenkachse (11), wobei die Achsen an einem ersten Element aus dem Teilepaar Deckel (40) und zugehöriger Behälter (30) zueinander im Wesentlichen parallel gelagert sind und jeweils einzeln zwischen einer ersten Position, in der jeweils mindestens eines ihrer freien Enden (16, 17) in Eingriff ist mit einem Lagerelement (31) an dem zweiten Element aus dem Teilepaar Deckel (40) und zugehöriger Behälter (30), und einer zweiten Position, in der die jeweilige Achse (11) nicht in Eingriff mit einem Lagerelement (31) an dem zweiten Element aus dem Teilepaar Deckel (40) und zugehöriger Behälter (30) ist, durch eine translatorische Relativverschiebung der Achsen bezüglich des jeweiligen mindestens einen Lagerelements bewegbar sind, und einen Blockiermechanismus (22, 23, 24, 25), der eine Achse (11) in der zweiten Position arretiert, **dadurch gekennzeichnet, dass** der Blockiermechanismus einen drehbaren Anschlag (23) umfasst, mit dem ein entsprechender an der Achse (11) angebrachter Anschlag arretierbar ist.

2. Deckelöffnungsmechanismus nach Anspruch 1, **dadurch gekennzeichnet, dass** die Achsen verschiebbar und die Lagerelemente fest sind.

3. Deckelöffnungsmechanismus (10) nach Anspruch 1, **dadurch gekennzeichnet, dass** die erste und zweite Achse (11) am Deckel (40) in Achsrichtung verschiebbar gelagert sind.

4. Deckelöffnungsmechanismus (10) nach einem der vorhergehenden Ansprüche, **dadurch gekennzeichnet, dass** für jede Achse (11) ein Betätigungsmechanismus (21, 14, 15, 42) vorgesehen ist, um die Achse (11) bzw. das Lagerelement aus der ersten Position in die zweite Position zu verschieben.

5. Deckelöffnungsmechanismus (10) nach Anspruch 4, **dadurch gekennzeichnet, dass** der Betätigungsmechanismus (14, 15, 42) jeweils durch eine Taste (21) auf der Deckelaußenseite betätigbar ist.

6. Deckelöffnungsmechanismus (10) nach einem der vorhergehenden Ansprüche, **dadurch gekennzeichnet, dass** der Betätigungsmechanismus einen Bolzen (42) umfasst, der in der ersten Position der Achse (11) an einem freien Ende (43) der Achse (11) angreift und diese so vorspannt, dass ihr anderes freies Ende (16) mit dem Lagerelement (31) an dem zweiten Element aus dem Teilepaar Deckel (40) und zugehöriger Behälter (30) in Eingriff ist und der Bolzen (42) zusammen mit dem freien Ende (43) der Achse (11), an dem der Bolzen (42) angreift, mit einem weiteren Lagerelement (31) an dem zweiten Element aus dem Teilepaar Behälter (30) und zugehöriger Deckel (40) in Eingriff ist.

7. Deckelöffnungsmechanismus (10) nach Anspruch 6, **dadurch gekennzeichnet, dass** für jede Achse (11) ein elastisches Element (41) vorgesehen ist, das die Achse (11) in die zweite Position vorspannt.

8. Deckelöffnungsmechanismus (10) nach einem der Ansprüche 1 bis 5, **dadurch gekennzeichnet, dass** die Achsen (11) jeweils mindestens zweiteilig sind und ein Betätigungselement (14, 15) die beiden Achsenteile (12, 13) verbindet.

9. Deckelöffnungsmechanismus (10) nach Anspruch 8, **dadurch gekennzeichnet, dass** das Betätigungselement (14, 15) die Achsenteile (12, 13) aus der ersten Position, in der die jeweils freien Enden (16, 17) in Eingriff mit Lagerelementen (31) an dem zweiten Element aus dem Teilepaar Behälter (30) und zugehöriger Deckel (40) sind, aufeinander zu in die zweite Position bewegt, in der die freien Enden (16, 17) nicht in Eingriff mit den Lagerelementen (31) sind.

10. Deckelöffnungsmechanismus (10) nach einem der Ansprüche 8 oder 9, **dadurch gekennzeichnet, dass** das Betätigungselement (14, 15) eine im Wesentlichen V-förmige Nut (18) aufweist, in der ein Endbereich (19, 20) der Achsenteile (12, 13) geführt wird.

11. Deckelöffnungsmechanismus (10) nach einem der Ansprüche 8 bis 10, **dadurch gekennzeichnet, dass** die Betätigungselemente (14) durch ein elastisches Element (15) so vorgespannt sind, dass sie die Achsen (11) in der ersten Position halten.

12. Deckelöffnungsmechanismus (10) nach einem der vorhergehenden Ansprüche, **dadurch gekennzeichnet, dass** der Blockiermechanismus weiter ein elastisches Element (25) umfasst, das den Anschlag (23) in die Arretierposition vorspannt, und dass die Arretierung durch Wechselwirkung eines mit dem Anschlag (23) hinsichtlich dessen Drehung verbundenen Fortsatzes mit einem am zweiten Element aus dem Teilepaar Deckel (40) und zugehöriger Behälter (30) angebrachten Anschlag lösbar ist.

13. Deckelöffnungsmechanismus (10) nach einem der vorhergehenden Ansprüche, weiter umfassend einen Sicherungsmechanismus (27, 28, 29), um ein gleichzeitiges Positionieren beider Achsen (11) in der zweiten Position zu verhindern.

14. Deckelöffnungsmechanismus (10) nach Anspruch 13, **dadurch gekennzeichnet, dass** der Sicherungsmechanismus Schieber (27) umfasst, die derart in Wechselwirkung mit dem Blockiermechanismus (23) sind, dass sie eine Achse (11) arretieren, wenn die andere Achse (11) in der zweiten Position ist.

15. Deckelöffnungsmechanismus (10) nach einem der vorhergehenden Ansprüche, **dadurch gekennzeichnet, dass** eine Einrichtung (45, 46, 47, 48, 49) zum automatischen Öffnen des Deckels (40) vorgesehen ist.

16. Deckelöffnungsmechanismus (10) nach Anspruch 15, **dadurch gekennzeichnet, dass** die Einrichtung zum automatischen Öffnen des Deckels (40) sich auf einer Kreisbahn am Behälter (30) bewegende Zapfen (46) umfasst, die mit Führungen (45) im Deckel (40) in Eingriff sind.

17. Deckelöffnungsmechanismus (10) nach Anspruch 16, **dadurch gekennzeichnet, dass** für jede Schwenkachse (11) ein Zapfen (46) und eine entsprechende Führung (45) am Deckel (40) vorgesehen ist und die Bewegungen der Zapfen (46) durch einen Kopplungsmechanismus (49) synchronisiert sind.

18. Deckelöffnungsmechanismus (10) nach einem der Ansprüche 16 oder 17, **dadurch gekennzeichnet, dass** die Zapfen (46) federbelastet oder mit einem Motor angetrieben sind.

19. Mittelkonsole für ein Fahrzeug, umfassend einen Behälter (30), einen Deckel (40) und einen Deckelöffnungsmechanismus (10) nach einem der vorhergehenden Ansprüche.

20. Mittelkonsole nach Anspruch 19, **dadurch gekennzeichnet, dass** der Behälter (30) ein Telefonfach ist.

21. Mittelkonsole nach Anspruch 20, weiter umfassend ein weiteres Ablagefach (50), das unter dem Telefonfach (30) liegt, wobei das Telefonfach mit dem Deckel (40) um eine weitere Achse (51), senkrecht zu den Schwenkachsen (11), schwenkbar ist.

22. Mittelkonsole nach Anspruch 21, **dadurch gekennzeichnet, dass** eine Kabelführung (55) an dem Telefonfach (30) vorgesehen ist, die durch eine am Behälter (50) drehbar gelagerte starre Führung (52) translatorisch bewegbar ist.

23. Mittelkonsole nach Anspruch 22, **dadurch gekennzeichnet, dass** die Kabelführung (55) in einem Zwischenfach (54) unter dem Telefonfach (30) vorgesehen ist.

24. Mittelkonsole nach einem der Ansprüche 19 bis 23, weiter umfassend einen Beleuchtungsmechanismus (61-65), der abhängig von der Öffnungsrichtung des Deckels selektiv Leuchtkörper (61, 62) im Deckel (40) und/oder Behälter (30) aktiviert.

## Claims

1. Cover opening mechanism (10) comprising a first pivot axle (11) and a second pivot axle (11), wherein the axles are mounted substantially parallel to one another on a first element of the pair of parts comprising the cover (40) and associated container (30) and are each individually movable between a first position, in which in each case at least one of their free ends (16, 17) engages by a bearing element (31) on the second element of the pair of parts comprising the cover (40) and associated container (30), and a second position, in which the respective axle (11) does not engage by a bearing element (31) on the second element of the pair of parts comprising the cover (40) and associated container (30), by means of a translational relative displacement of the axles with respect to the at least single bearing element in each case, and a blocking mechanism (22, 23, 24, 25) which arrests an axle (11) in the second position, **characterised in that** the blocking mechanism comprises a rotatable stop (23) by means of which a corresponding stop fitted on the axle (11) is arrestable.

2. Cover opening mechanism according to claim 1, **characterised in that** the axles are displaceable and the bearing elements are fixed.

3. Cover opening mechanism (10) according to claim 1, **characterised in that** the first and second axle (11) are mounted displaceably in the axial direction on the cover (40).

4. Cover opening mechanism (10) according to one of the preceding claims, **characterised in that** for each axle (11) an actuating mechanism (21, 14, 15, 42) is provided in order to displace the axle (11) or the bearing element from the first position into the second position.

5. Cover opening mechanism (10) according to claim 4, **characterised in that** each actuating mechanism (14, 15, 42) is actuable by a push button (21) on the outside of the cover.

6. Cover opening mechanism (10) according to one of the preceding claims, **characterised in that** the actuating mechanism comprises a bolt (42) which in the first position of the axle (11) engages on a free end (43) of the axle (11) and pretensions the latter in such a way that its other free end (16) is in engagement with the bearing element (31) on the second element of the pair of parts comprising the cover (40) and associated container (30) and the bolt (42) together with the free end (43) of the axle (11) on which the bolt (42) engages is in engagement with another bearing element (31) on the second element of the pair of parts comprising the container (30) and associated cover (40).

7. Cover opening mechanism (10) according to claim 6, **characterised in that** for each axle (11) an elastic element (41) is provided which pretensions the axle (11) into the second position.

8. Cover opening mechanism (10) according to one of claims 1 to 5, **characterised in that** the axles (11) are each in at least two parts and an actuating element (14, 15) connects the two axle parts (12, 13).

9. Cover opening mechanism (10) according to claim 8, **characterised in that** the actuating element (14, 15) moves the axle parts (12, 13) from the first position, in which the free ends (16, 17) are each in engagement with bearing elements (31) on the second element of the pair of parts comprising the container (30) and associated cover (40), towards one another into the second position in which the free ends (16, 17) are not in engagement with the bearing elements (31).

10. Cover opening mechanism (10) according to one of claims 8 or 9, **characterised in that** the actuating element (14, 15) has a substantially V-shaped groove (18) in which an end region (19, 20) of the axle parts (12, 13) is guided.

11. Cover opening mechanism (10) according to one of claims 8 to 10, **characterised in that** the actuating elements (14) are pretensioned by an elastic element (15) in such a way that they hold the axles (11) in the first position.

12. Cover opening mechanism (10) according to one of the preceding claims, **characterised in that** the blocking mechanism further comprises an elastic element (25) which pretensions the stop (23) into the arresting position and that the arrestment is releasable by interaction of an extension connected to the stop (23) with respect to the rotation thereof with a stop fitted on the second element of the pair of parts comprising the cover (40) and associated container (30).

13. Cover opening mechanism (10) according to one of the preceding claims, further comprising a securing mechanism (27, 28, 29) in order to prevent simultaneous positioning of both axles (11) in the second position.

14. Cover opening mechanism (10) according to claim 13, **characterised in that** the securing mechanism comprises slides (27) which interact with the blocking mechanism (23) in such a way that they arrest an axle (11) when the other axle (11) is in the second position.

15. Cover opening mechanism (10) according to one of the preceding claims, **characterised in that** a device (45, 46, 47, 48, 49) for automatic opening of the cover (40) is provided.

16. Cover opening mechanism (10) according to claim 15, **characterised in that** the device for automatic opening of the cover (40) comprises pins (46) moving on a circular path on the container (30) which are in engagement with guides (45) in the cover (40).

17. Cover opening mechanism (10) according to claim 16, **characterised in that** for each pivot axle (11) a pin (46) and a corresponding guide (45) is provided on the cover (40) and the movements of the pins (46) are synchronised by a coupling mechanism (49).

18. Cover opening mechanism (10) according to one of claims 16 or 17, **characterised in that** the pins (46) are spring-loaded or driven by a motor.

19. Central console for a vehicle comprising a container (30), a cover (40) and cover opening mechanism (10) according to any of the preceding claims.

20. Central console according to claim 19, **characterised in that** the container (30) is a telephone compartment.

21. Central console according to claim 20, further comprising another storage compartment (50) located under the telephone compartment (30), wherein the telephone compartment together with the cover (40) is pivotable about another axle (51) perpendicular to the pivot axles (11).

22. Central console according to claim 21, **characterised in that** a cable run (55) is provided on the telephone compartment (30) which run is translationally movable through a rigid guide (52) rotatably mounted on the container (50).

23. Central console according to claim 22, **characterised in that** the cable run (55) is provided in an intermediate compartment (54) below the telephone compartment (30).

24. Central console according to any of claims 19 to 23 further comprising a lighting mechanism (61-65) which depending on the direction of opening of the cover selectively activates lights (61, 62) in the cover (40) and/or container (30).

## Revendications

1. Mécanisme (10) d'ouverture d'un couvercle, comprenant un premier axe de pivotement (11) et un second axe de pivotement (11), les deux axés montés sensiblement parallèlement l'un à l'autre sur un premier élément formé par une paire de parties comprenant un couvercle (40) et un récipient associé (30), et sont déplaçables respectivement entre une première position, dans laquelle respectivement au moins l'une de leurs extrémités libres (16, 17) est en prise avec un élément de palier (31) sur le second élément constitué par la paire de parties comprenant le couvercle (40) et le récipient associé (30), et une seconde position, dans laquelle l'axe respectif (11) n'est pas en prise avec un élément de palier (31) sur le second élément constitué par la paire de parties comprenant le couvercle (40) et le récipient associé (30), sous l'effet d'un déplacement relatif de transmission des axes par rapport au respectivement au moins un élément de palier, et comportant un mécanisme de blocage (22, 23,24, 25), qui retient un axe (11) dans la seconde position, **caractérisé en ce que** le mécanisme de blocage comprend une butée rotative (23), avec laquelle peut être retenue une butée correspondante montée sur l'axe (11).

2. Mécanisme d'ouverture de couvercle selon la revendication 1, **caractérisé en ce que** les axes sont déplaçables et les éléments de palier sont fixes.

3. Mécanisme (10) d'ouverture de couvercle selon la revendication 1, **caractérisé en ce que** les premier et second axes (11) sont montés de manière à être déplaçables dans la direction axiale sur le couvercle (40).

4. Mécanisme (10) d'ouverture de couvercle selon l'une des revendications précédentes, **caractérisé en ce que** pour chaque axe (11) est prévu un mécanisme d'actionnement (21, 14, 15, 42), servant à déplacer l'axe (11) ou l'élément de palier depuis la première position dans la seconde position.

5. Mécanisme (10) d'ouverture de couvercle selon la revendication 4, **caractérisé en ce que** le mécanisme d'actionnement (14, 15, 42) peut être actionné respectivement au moyen d'une touche (21) sur le côté extérieur du couvercle.

6. Mécanisme (10) d'ouverture de couvercle selon l'une des revendications précédentes, **caractérisé en ce qu'**il comprend un goujon (42), qui, lorsque l'axe (11) est dans la première position, attaque une extrémité libre (43) de l'axe (11) et précontraint ce dernier de telle sorte que son autre extrémité libre (16) engrène avec l'élément de palier (31) sur le second élément situé par la paire de parties formées par le couvercle (40) et le récipient associé (30), et le goujon (42) est en prise conjointement avec l'extrémité libre (43) de l'axe (11) qu'attaque le goujon (42), avec un autre élément de palier (31) situé sur le second élément formé par la paire de parties comprenant le récipient (30) et le couvercle associé (40).

7. Mécanisme (10) d'ouverture de couvercle selon la revendication 6, **caractérisé en ce que** pour chaque axe (11) est prévu un élément élastique (41), qui précontraint l'axe (11) dans la seconde position.

8. Mécanisme (10) d'ouverture de couvercle selon l'une des revendications 1 à 5, **caractérisé en ce que** les axes (11) sont formés respectivement d'au moins deux parties, et qu'un élément d'actionnement (14, 15) relie les deux parties (12, 13) de l'axe.

9. Mécanisme (10) d'ouverture de couvercle selon la revendication 8, **caractérisé en ce que** l'élément d'actionnement (14, 15) déplace les parties (12, 13) de l'axe l'une vers l'autre depuis la première position, dans laquelle les premières extrémités respectives (16, 17) sont en prise avec des éléments de palier (31) situés sur le second élément formé par la paire de parties comprenant le récipient (30) et le couvercle associé (40), pour venir dans la seconde position, dans laquelle les extrémités libres (16, 17) ne sont pas en prise avec les éléments de palier (31).

10. Mécanisme (10) d'ouverture de couvercle selon l'une des revendications 8 ou 9, **caractérisé en ce que** l'élément d'actionnement (14, 15) possède une rainure sensiblement en forme de V (18), dans laquelle une portion d'extrémité (19, 20) des parties (12, 13) de l'axe est guidée.

11. Mécanisme (10) d'ouverture de couvercle selon l'une des revendications 8 à 10, **caractérisé en ce que** les éléments d'actionnement (14) sont précontraints par un élément élastique (15) de telle sorte qu'ils retiennent les axes (11) dans la première position.

12. Mécanisme (10) d'ouverture de couvercle selon l'une des revendications précédentes, **caractérisé en ce que** le mécanisme de blocage comprend en outre un élément élastique (25), qui précontraint la butée (23) dans la position d'arrêt et que l'arrêt peut être supprimé au moyen de l'interaction d'un prolongement relié à la butée (23) en rapport avec sa rotation, avec une butée montée sur le second élément de la paire de parties comprenant le couvercle (40) et le récipient associé (30).

13. Mécanisme (10) d'ouverture de couvercle selon l'une des revendications précédentes, comprenant en outre un mécanisme de sécurité (27, 28, 29) destiné à empêcher un positionnement simultané des deux axes (11) dans la seconde position.

14. Mécanisme (10) d'ouverture de couvercle selon la revendication 13, **caractérisé en ce que** le mécanisme de sécurité comporte des poussoirs (27), qui coopèrent avec le mécanisme de blocage (23) de telle sorte qu'ils arrêtent un axe (11) lorsque l'autre axe (11) est dans la seconde position.

15. Mécanisme (10) d'ouverture de couvercle selon l'une des revendications précédentes, **caractérisé en ce que** le dispositif (45, 46, 47, 48, 49) est prévu pour l'ouverture automatique du couvercle (40).

16. Mécanisme (10) d'ouverture de couvercle selon la revendication 15, **caractérisé en ce que** le dispositif prévu pour l'ouverture automatique du couvercle (40) comprend des ergots (46), qui se déplacent sur une trajectoire circulaire sur le récipient (30) et qui engrènent avec des guides (45) situés dans le couvercle (40).

17. Mécanisme (10) d'ouverture de couvercle selon la revendication 16, **caractérisé en ce que** pour chaque axe de pivotement (11) il est prévu un ergot (46) et un guide correspondant (45) sur le couvercle (40) et les déplacements des ergots (46) sont synchronisés par un mécanisme d'accouplement (49).

18. Mécanisme d'ouverture (10) de couvercle selon l'une des revendications 16 ou 17, **caractérisé en ce que** les deux ergots (46) sont chargés par un ressort ou sont entraînés par un moteur.

19. Console centrale pour un véhicule, comprenant un récipient (30), un couvercle (40) et un mécanisme (10) d'ouverture de couvercle selon l'une des revendications précédentes.

20. Console centrale selon la revendication 19, **caractérisée en ce que** le récipient (30) est un logement pour téléphone.

21. Console centrale selon la revendication 20, comprenant en outre un autre logement de rangement (50), qui est situé au-dessous du logement (30) pour le téléphone, le logement pour le téléphone pouvant pivoter avec le couvercle (40) autour d'un autre axe (51) perpendiculaire aux axes de pivotement (11).

22. Console centrale selon la revendication 21, **caractérisée en ce qu'**il est prévu un guide-câble (55) situé sur le logement (30) pour le téléphone et qui est déplaçable par translation au moyen d'un guide rigide (59) monté de manière à pouvoir pivoter sur le récipient (50).

23. Console centrale selon la revendication 22, **caractérisée en ce que** le guide-câble (55) est prévu dans un logement intercalaire (54) au-dessous du logement (30) pour le téléphone.

24. Console centrale selon l'une des revendications 19 à 23, comprenant en outre un mécanisme d'éclairement (61-65), qui, en fonction de la direction d'ouverture du couvercle, active sélectivement des corps lumineux (61, 62) dans le couvercle (40) et/ou dans le récipient (30).
